# EUROPEAN PATENT SPECIFICATION

(11) **EP 3 305 115 B1**
(45) Date of publication and mention of the grant of the patent: **26.06.2019**
(21) Application number: 17194924.1
(22) Date of filing: 05.10.2017
(51) Int. Cl.: A41D 19/00, A41D 13/05, A41D 13/08, A41D 19/015

(54) **PROTECTIVE APPAREL AND METHODS OF MAKING THE SAME**
SCHUTZBEKLEIDUNG UND VERFAHREN ZUR HERSTELLUNG DAVON
VÊTEMENTS DE PROTECTION ET LEURS PROCÉDÉS DE FABRICATION

(30) Priority: 07.10.2016 US 201615288845
(43) Date of publication of application: 11.04.2018
(73) Proprietor: Adidas AG, 91074 Herzogenaurach (DE)
(72) Inventor: Staub, Nicholas William, Portland, OR 97217 (US); Iovu, Tiberiu, Portland, OR 97217 (US); Byrne, John Thomas, Portland, OR 97217 (US); Murphy, Kevin Alan, Portland, OR 97217 (US); Bernarding, Mitchell Pierce, Portland, OR 97217 (US); Ling, Henry William, Portland, OR 97217 (US)
(74) Representative: Wegner, Hans

(56) References cited:
- US-A1- 2005 281 988
- US-A1- 2014 093 695
- US-A1- 2015 202 521

## Description

### BACKGROUND

### Field

The present disclosure relates to protective apparel and equipment and methods of manufacturing protective apparel and equipment. For example, the present disclosure relates to embodiments of wearable padding and gloves for lacrosse, hockey, baseball, etc. and methods of manufacturing such equipment.

### Background

Protective apparel is important equipment for athletes to wear in sports, in particular, contact sports such as lacrosse and hockey. Early protective apparel provided protection for athletes, but was often burdensome and bulky for optimal athletic performance. More streamlined protective apparel has been created to reduce the bulky nature of earlier models, however, some updated apparel does not provide adequate protection. A next generation design for protective padding is needed to provide adequate protection to athletes, but also be less cumbersome and more mobile. Furthermore, it is beneficial to design protective apparel with more protection in some regions than others. Therefore, protective apparel is needed that provides adequate protection in key regions, while maintaining mobility and flexibility for the player so as not to limit performance.

Document US 2015/020 252 1 A1 relates to a protective glove having a unitary dorsal panel formed from an inner scrim material and a plurality of protective elements molded directly to an exterior surface of the inner scrim. The plurality of protective elements are formed in an array of discrete islands each separated by zero-elevation interstitial spaces. The unitary dorsal panel is sewn or otherwise attached circumferentially to the palmer sections of the glove. This array provides increased protection to the user's fingers, hands, wrists, and lower forearms while maintaining flexibility and tactile feel on both palmar and dorsal sides of the glove, increasing flexibility where needed without compromising protection.

### BRIEF SUMMARY

In some embodiments, an article of protective apparel can include a first outer shell having a vacuum-formed first material. In some embodiments, the first outer shell can include a first cavity, a second cavity, and a channel disposed between the first cavity and the second cavity. In some embodiments, the protective apparel can include a first padding piece disposed in the first cavity, a second padding piece disposed in the second cavity, and a first inner layer attached to the first outer shell. In some embodiments, the first padding piece and the second padding piece can be disposed between the first outer shell and the first inner layer. In some embodiments, the first material can include a thermoplastic elastomer. In some embodiments, the first material can include thermoplastic polyurethane. In some embodiments, the first material can include a fabric.

In some embodiments, the first and/or second padding piece can include die-cut foam. In some embodiments, the first and/or second padding piece can include molded foam. In some embodiments, the first and/or second padding piece can include hardened liquid foam.

In some embodiments, the protective apparel can be a glove. In some embodiments, the glove can include a palmar portion, a dorsal portion, and a cuff portion. In some embodiments, the dorsal portion can include the first outer shell, the first padding piece, the second padding piece, and the first inner layer. In some embodiments, the cuff portion can be coupled to the dorsal portion. In some embodiments, the cuff portion can include a second outer shell having a vacuum-formed second material. In some embodiments, the first material and the second material can be the same. In some embodiments, the second outer shell can have a third cavity, a third padding piece disposed in the third cavity, and a second inner layer attached to the second outer shell. In some embodiments, the third padding piece can be disposed between the second outer shell and the second inner layer. In some embodiments, a strap can be configured to secure the cuff portion about a wearer's arm.

In some embodiments, the protective apparel can be an elbow pad, shoulder pads, or a chest protector.

In some embodiments, an article of protective apparel can include a padded portion having an outer layer, an inner layer, and a padding piece disposed between the outer layer and the inner layer in a cavity of the outer layer. In some embodiments, the padded portion can be formed by vacuum-forming the outer layer on a mold, disposing the padding piece in the cavity of the outer layer, and attaching the inner layer to the outer layer. In some embodiments, the outer layer can include a thermoplastic elastomer. In some embodiments, the padding piece can include die-cut foam.

In some embodiments, a method of making an article of protective apparel can include disposing a first layer on a vacuum mold having a pattern with a plurality of indentations, vacuum-forming the first layer such that the first layer includes a plurality of cavities corresponding to the indentations of the vacuum mold, disposing foam in the cavities of the first layer, and attaching a second layer to the first layer. In some embodiments, disposing foam in the cavities can include disposing die-cut foam pieces in the cavities. In some embodiments, disposing foam in the cavities can include injecting liquid foam in the cavities. In some embodiments, the method can include fabricating a sublimated graphic on an outer surface of the first layer. In some embodiments, the method can include disposing a sheet over the first layer prior to vacuum-forming the first layer. In some embodiments, the sheet can include silicone or an elastomer. **<<The invention is defined by the independent claims>>**

### BRIEF DESCRIPTION OF THE DRAWINGS/FIGURES

The accompanying drawings, which are incorporated herein and form a part of the specification, illustrate the embodiments and, together with the description, further serve to explain the principles and to enable a person skilled in the relevant art(s) to make and use the embodiments.
FIG. 1 illustrates a flowchart for a method of making protective apparel, according to an embodiment.
FIG. 2 illustrates a flowchart for a method of making protective apparel, according to an embodiment.
FIG. 3 illustrates a flowchart for a method of making protective apparel, according to an embodiment.
FIG. 4 illustrates a cross-sectional view of protective apparel, according to an embodiment.
FIG. 5 illustrates a cross-sectional view of protective apparel, according to an embodiment.
FIG. 6 illustrates a foam tray for protective apparel, according to an embodiment.
FIG. 7 illustrates a dorsal view of a glove, according to an embodiment.
FIG. 8 illustrates a dorsal view of a glove, according to an embodiment.
FIG. 9 illustrates a palmar view of a glove, according to an embodiment.
FIG. 10 illustrates a dorsal view of a glove, according to an embodiment.
FIG. 11 illustrates a palmar view of a glove, according to an embodiment.
FIG. 12 illustrates a dorsal perspective view of a glove, according to an embodiment.
FIG. 13 illustrates a palmar perspective view of a glove, according to an embodiment.
FIG. 14 illustrates a glove template, according to an embodiment.
FIG. 15 illustrates a rear view of a glove template, according to an embodiment.
FIG. 16 illustrates a glove template, according to an embodiment.
FIG. 17 illustrates an elbow pad, according to an embodiment.
FIG. 18 illustrates a rear view of an elbow pad, according to an embodiment.
FIG. 19 illustrates a chest protector, according to an embodiment.
FIG. 20 illustrates shoulder pads, according to an embodiment.
FIG. 21 illustrates protective apparel, according to an embodiment.
FIG. 22 illustrates a rear view of protective apparel, according to an embodiment.
FIG. 23 illustrates an outer layer of protective apparel on a mold, according to an embodiment.
FIG. 24 illustrates an outer layer of protective apparel with foam on a mold, according to an embodiment.
FIG. 25 illustrates a plate for forming protective apparel, according to an embodiment.
FIG. 26 illustrates a die-cut foam sheet, according to an embodiment.
FIG. 27 illustrates a glove template with foam in cavities, according to an embodiment.
FIG. 28 illustrates a glove mold, according to an embodiment.
FIG. 29 illustrates an elbow pad mold, according to an embodiment.
FIG. 30 illustrates a chest mold for shoulder pads, according to an embodiment.
FIG. 31 illustrates a back mold for shoulder pads, according to an embodiment.
FIG. 32 illustrates a flowchart for a method of making protective apparel, according to an embodiment.
FIG. 33 illustrates a cross-section of a protective apparel layer on a mold, according to an embodiment.

The features and advantages of the embodiments will become more apparent from the detailed description set forth below when taken in conjunction with the drawings, in which like reference characters identify corresponding elements throughout. In the drawings, like reference numbers generally indicate identical, functionally similar, and/or structurally similar elements.

### DETAILED DESCRIPTION

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The following examples are illustrative, but not limiting, of the present embodiments. Other suitable modifications and adaptations of the variety of conditions and parameters normally encountered in the field, and which would be apparent to those skilled in the art, are within the scope of the disclosure.

Protective apparel, padding, equipment (e.g., sports equipment), etc., referred to herein generally as "protective apparel," can be made according to any of the methods describes herein. A person skilled in the relevant art(s) will understand how to apply the disclosed methods to make the particular protective apparel described herein, as well as other types of protective apparel. Therefore, an embodiment disclosed as being manufactured according to a particular method is not limited to being manufactured by that method and can be made according to any of the methods described herein. Furthermore, some embodiments of the manufacturing methods may include each of the steps described herein, while others may not include each step.

The disclosed methods can be implemented to make protective apparel or portion of protective apparel, for example, sporting equipment including, but not limited to, gloves (e.g., lacrosse gloves, hockey gloves, soccer goalkeeper gloves, football gloves, baseball and softball batting gloves, weightlifting gloves, boxing gloves, tactical law enforcement gloves, or work gloves), elbow pads, arm pads, knee pads, shin pads (e.g., soccer or hockey shin guards), leg pads (e.g., hockey goalie pads) shoulder pads, chest protectors, rib pads, thigh pads, hip pads, and protective headgear. Other types of protective or padded equipment, for example, gym mats, wall padding, etc. can also be made according to the methods described herein.

In some embodiments, protective apparel can be made with intricately formed padding pieces with an outer layer or shell of material over the padding pieces. In some embodiments, a thermoplastic, a thermoplastic elastomer, thermoplastic polyurethane (TPU), textile, multi-layered sheet containing both a textile and a thermoplastic material, or composite material can form the outer shell. In some embodiments, the padding pieces can be foam, for example, but not limited to polyurethane foam, polyethylene foam, polystyrene foam, EVA foam, vinyl foam, dilatant material, polyester foam, memory foam, gels, or foam composites. Padding pieces can be layered with other padding pieces or reinforcing materials, such as plastic or rubber materials, to create assemblies containing varying levels of durometer and protection.

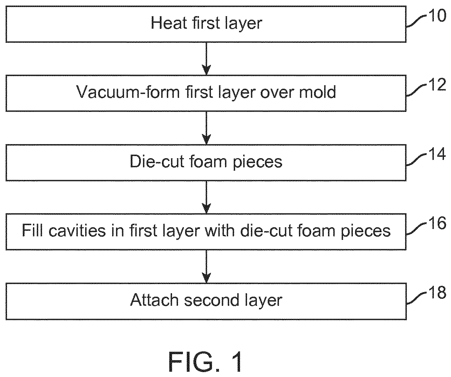

FIG. 1 illustrates a method of manufacturing protective apparel, according to an embodiment. At Step 10, a first layer of the protective apparel can be heated. At Step 12, the first layer can be vacuum-formed over a mold. In some embodiments the first layer may not be heated before being vacuum-formed over the mold. In some embodiments, the first layer can itself have multiple layers. At Step 14, foam pieces can be die-cut. For example, foam pieces can be die-cut from a sheet of foam. In some embodiments, foam can be molded into a particular shape and the molded foam can be used instead of, or in addition to, die-cut foam. At Step 16, cavities or indentations created by vacuum-forming the first layer over the mold can act as receptacles and be filled or partially filled with die-cut foam pieces. At Step 18, a second layer can be attached to the first layer to enclose the die-cut foam pieces between the first and second layers.

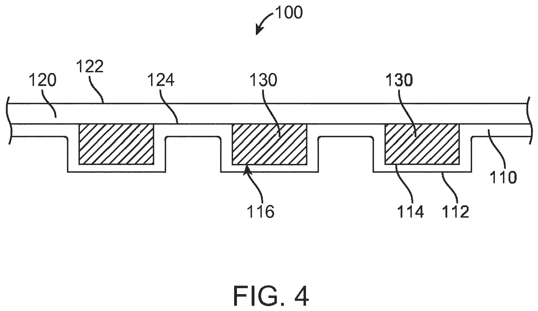

FIG. 4 illustrates a cross-sectional view of protective apparel 100, according to an embodiment. Protective apparel 100 can be manufactured according to the method described, for example, with respect to FIG. 1. In some embodiments, protective apparel 100 can include outer layer 110 having an exterior surface 112 and interior surface 114. By vacuum forming outer layer 110, one or more cavities 116 can be formed in outer layer 110. In some embodiments, the outer layer 110 can be a first material, for example, but not limited to a thermoplastic, a thermoplastic elastomer, thermoplastic polyurethane (TPU), textile, multi-layered sheet containing both a textile and a thermoplastic material, or composite material can form the outer shell.

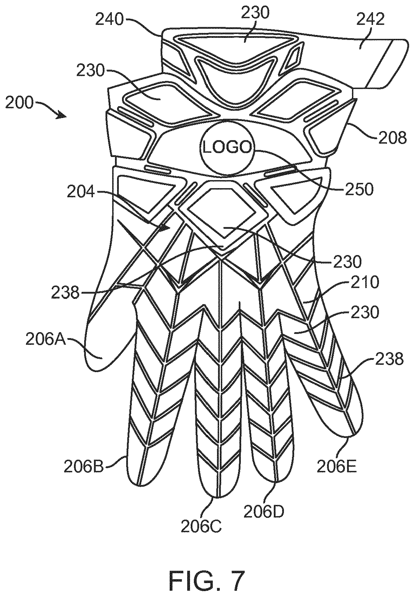

In some embodiments, padding, for example, foam pieces 130 can be disposed in the cavities 116. For example, pieces of die-cut foam pieces 130 can be disposed within the cavities 116 in outer layer 110. In some embodiments, the foam pieces 130 can be die-cut with a stencil-like tool that allows for intricate patterns of the foam pieces 130 in the protective apparel 100, as shown, for example, in FIGS. 7, 8, 10, 17, 19, and 21. In some embodiments, foam can be molded into a particular shape and the molded foam can be used instead of, or in addition to, die-cut foam.

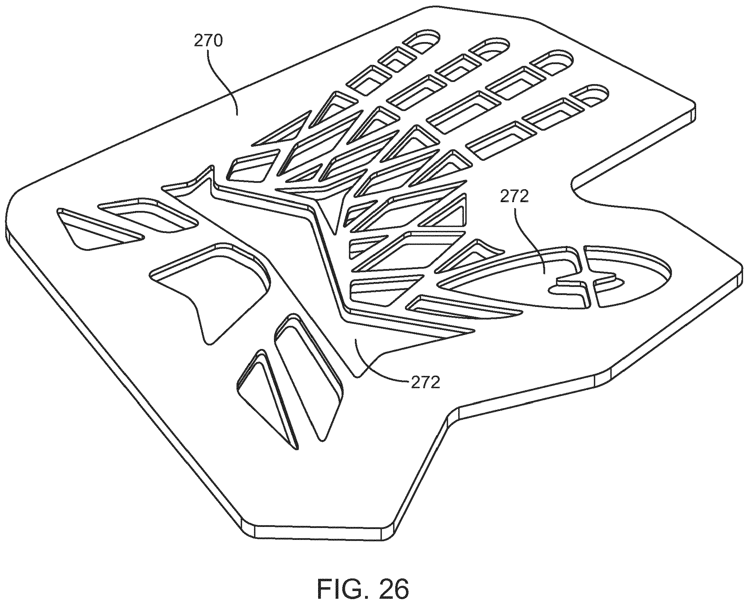

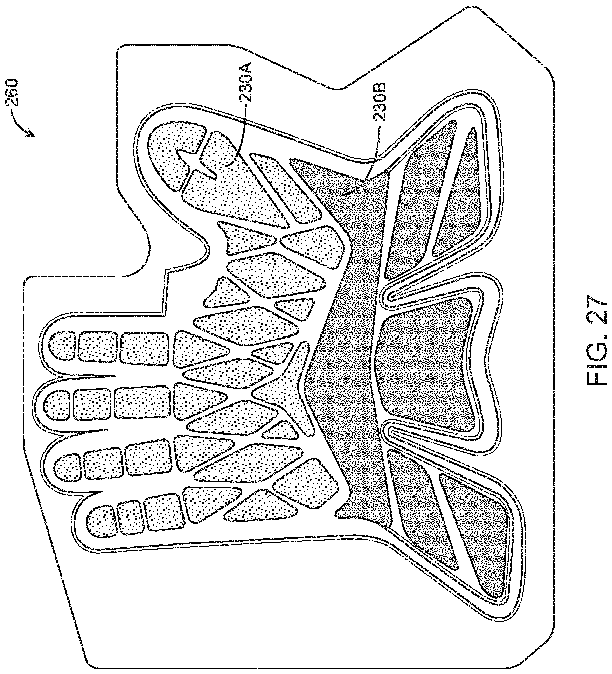

In some embodiments, the foam pieces 130 can be inserted while the vacuum is still on. In some embodiments, the foam pieces 130 can be die-cut using a template that corresponds to cavities 116 of the outer layer 110 of the protective apparel 100. For example, FIG. 26 illustrates a foam sheet 270 with holes 272 where the intricately shaped pieces of foam have been cut out and removed to be disposed within the cavities 116 of the outer layer 110. The foam pieces 130 can be arranged in the outer layer 110 with the outer layer 110 acting as an "ice tray" and the foam pieces as the ice cubes, for example, as shown in the glove template 260 in FIG. 27. As such, in some embodiments, the foam pieces 130 can correspond in size, shape, and depth to the cavities 116. In some embodiments, a volume of foam pieces 130 can be approximately 10% larger than cavities 116, so that the foam pieces 130 can be pressed into the cavities 116 such that the foam pieces 130 deform for a tight fit.

Multiple types of foam and foam of different densities can be used in the same protective apparel. For example, certain areas of the protective apparel may be suited for harder foam (i.e., denser foam) in order to provide additional protection. In other areas, softer foam (i.e., less dense foam) can allow for increased flexibility, while still providing some protection. Protective apparel with a customized protection profile can thus be achieved. For example, FIG. 27 illustrates foam pieces 230A having a first density and foam pieces 230B having a second density.

Referring again to FIG. 4, in some embodiments, protective apparel 100 can include inner layer 120 having a first surface 122 and a second surface 124. In some embodiments, inner layer 120 can be disposed over outer layer 110 and foam pieces 130 to encapsulate the foam pieces 130 between outer layer 110 and inner layer 120 of the protective apparel 100. Inner layer 120 can be any suitable material, for example, TPU or a textile. In some embodiments, inner layer 120 can be hot-melted to the backside of the outer layer 110 and foam pieces 130 while still on the vacuum mold.

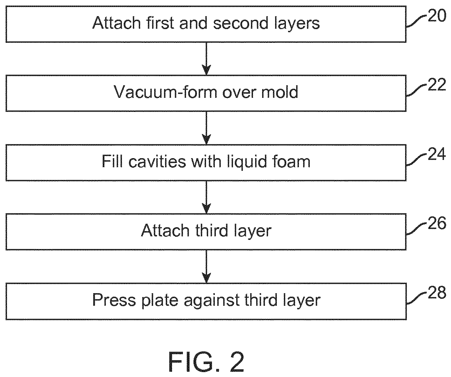

FIG. 2 illustrates a method of manufacturing protective apparel, according to an embodiment. At Step 20, a first layer and a second layer can be attached. This is represented, for example, by outer layer 110 in FIG. 4. In some embodiments, a textile and TPU film can be attached to form outer layer 110. In some embodiments, the textile and TPU can be hot-pressed together to bond the first and second layer together. In some embodiments, the hot-press can occur at 200 to 400 degrees Fahrenheit for 10 to 30 seconds. In some embodiments, the hot-press can occur at 250 to 350 degrees Fahrenheit. In some embodiments, the hot-press can occur at about 300 degrees Fahrenheit. In some embodiments, the hot-press can occur for 15 to 25 seconds. In some embodiments, the hot-press can occur for about 18 seconds. In some embodiments, only one of the TPU film and textile forms outer layer 110.

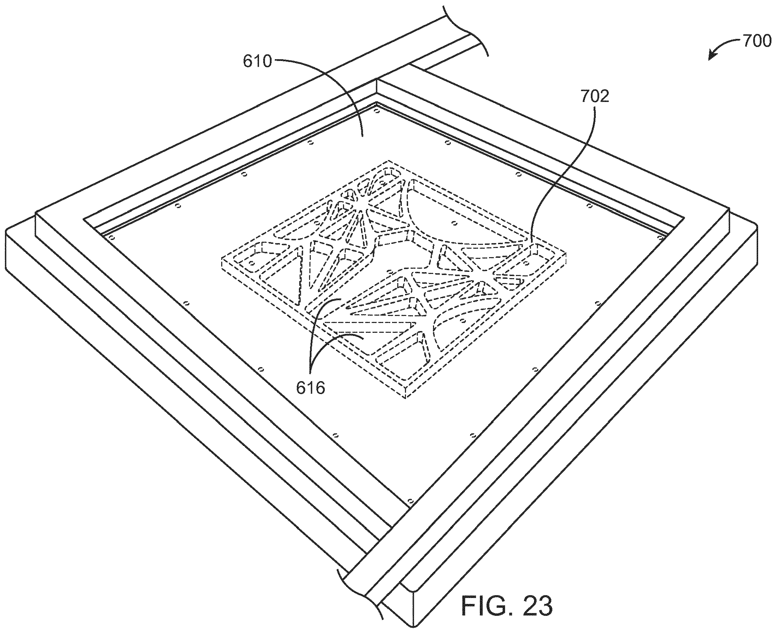

At Step 22, the first and second layers (or only a single layer) can be vacuum-formed over a mold, shaping outer layer 110. In some embodiments, a textile side can contact the mold. In some embodiments, a TPU side can contact the mold. The vacuum-formed outer layer 110 can form an "ice tray," for example, as described above with respect to FIG. 1 and shown, for example, in FIG. 23. The pattern 702 of the mold 700 in FIG. 23, which can be configured for any of the types of protective apparel described herein, can include ridges and cavities that form the "ice tray."

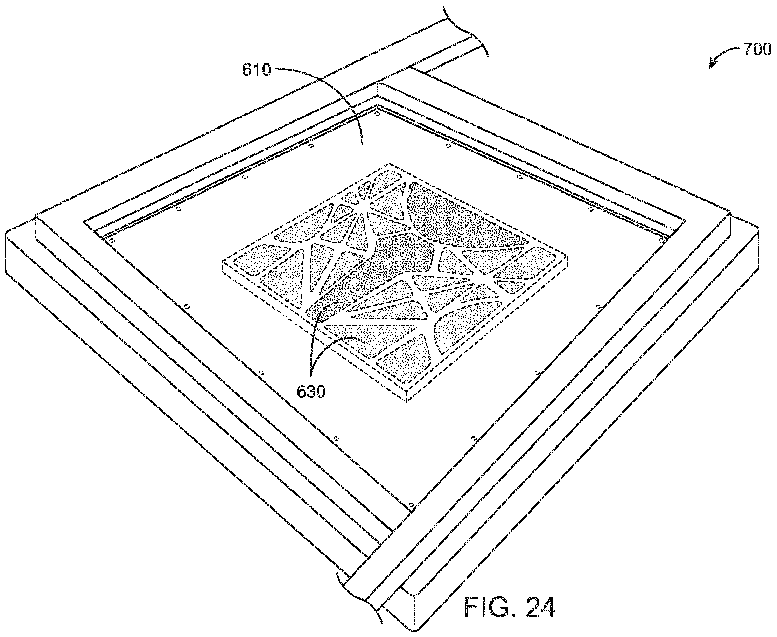

At Step 24, cavities in the molded outer layer can be filled with liquid foam, for example, as shown in FIG. 24. In some embodiments, the TPU side of the outer layer 110, 610 receives the foam. In some embodiments, liquid foam can be poured into the cavities of the molded "ice tray." In some embodiments, liquid foam can be injected into the cavities of the molded "ice tray." In some embodiments, the liquid foam can be poured or injected into the mold while the vacuum is still on. In some embodiments, excess liquid foam can be cleaned off before it hardens, for example, with a squeegee. Different types of foam or foam of different densities can be poured or injected into the cavities. As described above, this can provide additional protection in certain areas, while allowing for increased flexibility in other areas.

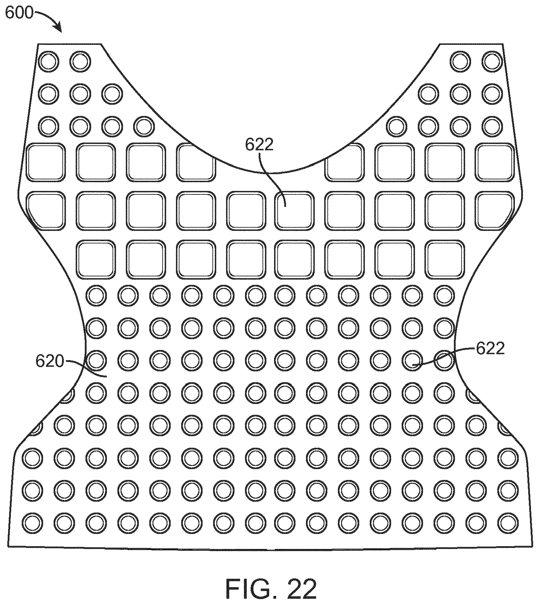

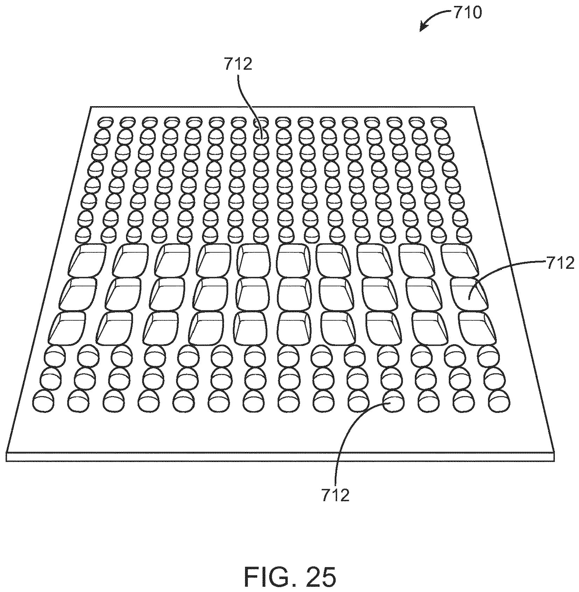

At Step 26, a third layer (inner layer), for example TPU or a textile, is attached to the first and second layers to encapsulate the foam between the composite first and second layers and the third layer. At step 28, a plate is pressed against the third layer, as described below with respect to FIG. 25, for example. The plate includes one or more indentations and/or protrusions. As the foam is cured, the expanding foam presses against the plate and is shaped by the corresponding indentations and protrusions. As shown, for example in FIG. 22, the inner layer 620 of the protective apparel 600 thus includes one or more protrusions 622. The inner layer 620 is the body-touching side of the protective apparel 600, and so the protrusions 622 promote and improve air flow, keeping the athlete cooler.

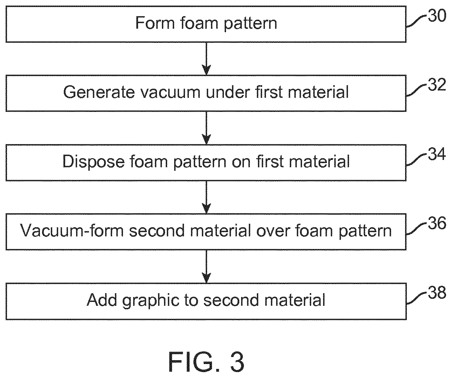

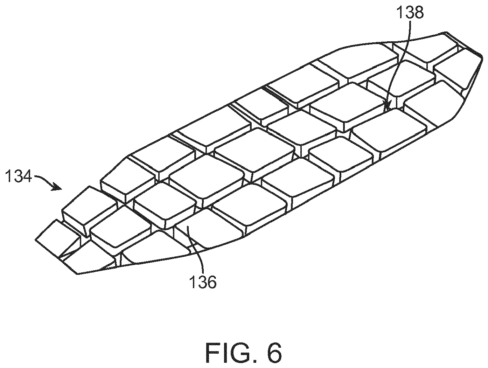

FIG. 3 illustrates a method of manufacturing protective apparel, according to an embodiment. At Step 30, a foam pattern can be formed. For example, FIG. 6 illustrates a foam tray 134, according to an embodiment. In some embodiments, foam tray 134 can have a plurality of cells 136 which can protrude from the surface of foam tray 134. Cells 136 can be various shapes and sizes, for example, but not limited to, squares, rectangles, triangles, circles, ovals, etc. In some embodiments, foam tray 134 can include one or more channels or grooves 138 in the surface of foam tray 134. In some embodiments, foam tray 134 can resemble an upside-down ice cube tray. In some embodiments, foam tray 134 can include a plurality of rows and columns of cells 136.

At Step 32, a vacuum can be generated under a first material. At Step 34, the foam pattern can be disposed on the first material. At Step 36, a second material (e.g., TPU or a textile) can be vacuum-formed over the foam pattern. At Step 38, one or more graphic can be created on the second material. For example, a graphic can be sublimated on the second material, before or after vacuum-forming the second material. Other embodiments can include graphics (e.g., sublimated graphics) as well.

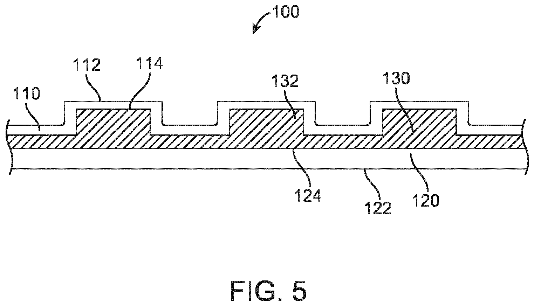

FIG. 5 illustrates a cross-sectional view of protective apparel 100, according to an embodiment. In some embodiments, protective apparel 100 as shown in FIG. 5 can be manufactured, for example, using the method described with respect to FIG. 3. In some embodiments, foam 130 (e.g., foam tray 134 shown in FIG. 6) can be disposed on inner layer 120, for example, on second surface 124 of inner layer 120. In some embodiments, foam 130 can have one or more protrusions 132. In some embodiments, interior surface 114 of outer layer 110 can be disposed on foam 130. In some embodiments, outer layer 110 can have a graphic sublimated onto the exterior surface 112 of outer layer 110, before or after outer layer 110 is formed over foam 130.

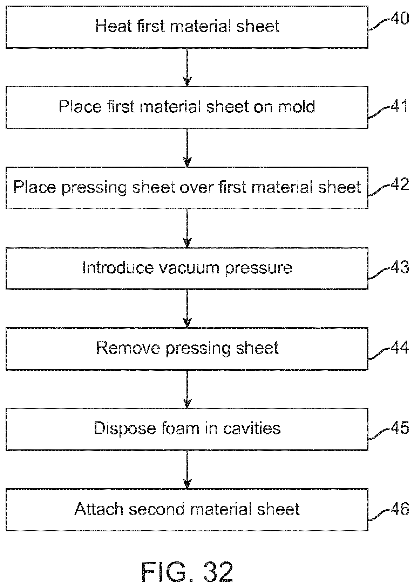

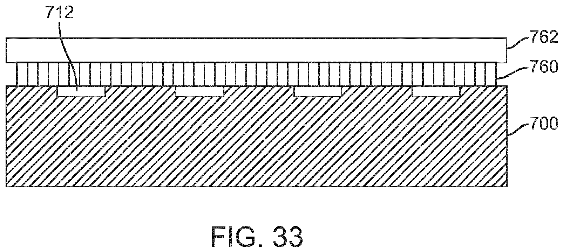

FIG. 32 illustrates a method of manufacturing protective apparel, according to an embodiment. FIG. 33 illustrates a cross-sectional view of a protective apparel layer on a mold, according to an embodiment, which can undergo the method described with respect to FIG. 32. In some embodiments, a first material sheet 760 can be disposed on a mold 700, for example, a vacuum mold. In some embodiments, mold 700 can have one or more indentations 712. Upon vacuum-forming, the indentations 712 create the corresponding cavities described herein. The raised portions between the indentations 712 create the channels or grooves described herein, which can also be described as ridges, depending which side of the formed material is being viewed.

In some embodiments, a pressing sheet 762 can be disposed over first material sheet 760. Protective apparel can be manufactured by vacuum-forming first material sheet 760 and pressing sheet 762 on mold 700, for example, as described below.

As shown, for example, in the embodiment in FIG. 32, at Step 40, a first material sheet can be heated. In some embodiments, the first material sheet can include a thermoplastic material. In some embodiments, the material sheet can be composed of multiple layers of varying materials, including, but not limited to, a thermoplastic, a thermoplastic elastomer, thermoplastic polyurethane (TPU), textile, both a textile and a thermoplastic material, composite material, or any combination thereof. At Step 41, the first material sheet can be placed on a mold. For example, the first material sheet can be placed on a vacuum mold.

At Step 42, a pressing sheet can be disposed over the first material sheet. In some embodiments, the pressing sheet can have low air permeability to promote suction between the vacuum mold, the pressing sheet, and the first material sheet disposed between the mold and pressing sheet. In some embodiments, the pressing sheet can be silicone rubber or an elastomeric material. Other materials can also be used for the pressing sheet.

At Step 43, vacuum pressure can be introduced. This can cause the pressing sheet to press the heated first material sheet against the mold, which can permanently form the first material sheet according to the mold design. That is, the first material sheet can be drawn into the indentations on the mold such that the first material sheet has indentations or cavities. In some embodiments, the vacuum pressure can then be turned off. At Step 44, the pressing sheet can be removed from the first material sheet, for example, by peeling the pressing sheet away from the first material sheet.

At Step 45, foam can be disposed in the cavities formed in the first material sheet. For example, die-cut foam, molded foam, and/or liquid foam can be disposed in the cavities, as described herein. At Step 46 a second material sheet can be attached to the first material sheet, encapsulating the foam between the first and second material sheets.

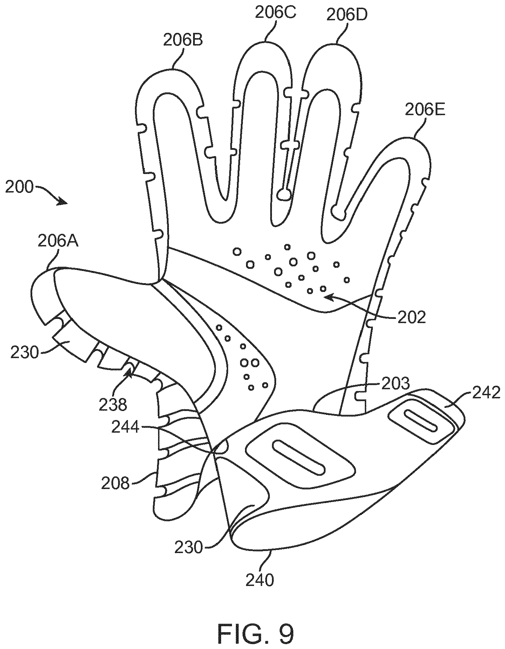

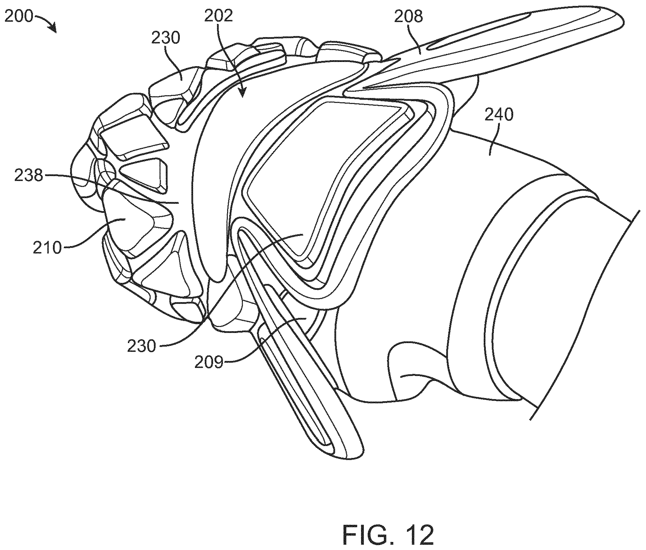

FIGS. 7-13 illustrate glove 200, according to embodiments. Glove 200 and portions of glove 200 can be manufactured using any of the methods described herein. In some embodiments, glove 200 can include a palmar portion 202 as shown, for example, in FIGS. 9, 11, and 13. Glove 200 can include dorsal portion 204 as shown, for example, in FIGS. 7, 8, 10, and 12. In some embodiments, glove 200 can include fingers 206A-E. In some embodiments, glove 200 can include wrist portion 208. In some embodiments, outer layer 210 can encapsulate a plurality of pads 230, which can provide protection to the wearer's hand.

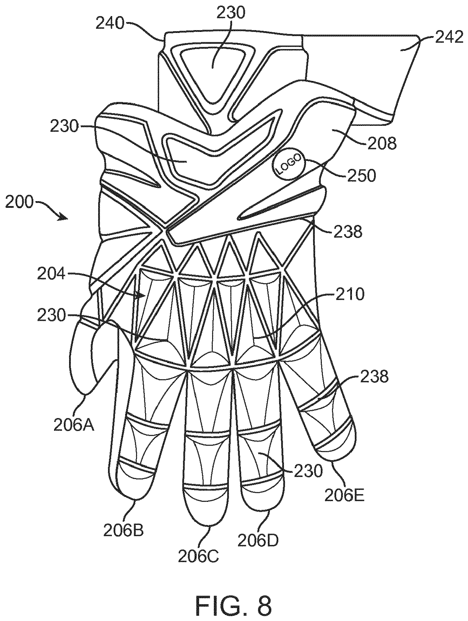

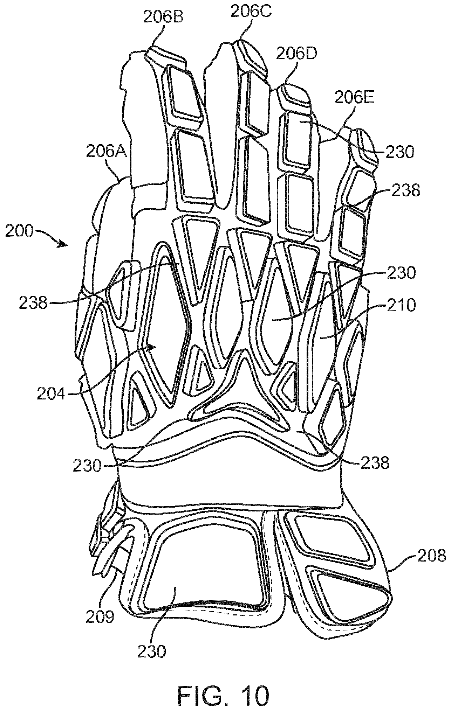

In some embodiments, glove 200 can include a plurality of grooves 238 in between the pads 230. The pads 230 of dorsal portion 204 can be any size, shape, thickness, or configuration. In some embodiments, pads 230 can grooves 238 can be disposed at discrete anatomical locations to provide protection to the wearer's hand, while also allowing mobility of the hand. For example, as shown in FIG. 7, in some embodiments, a groove 238 can extend lengthwise along one or more fingers 206A-E. In some embodiments, a plurality of pads 230 can be disposed on either side of groove 238 along finger 206A-E. In some embodiments, for example, as shown in FIGS. 8 and 10, grooves 238 can be located approximately at each joint of the finger 206A-E, with pads 230 being disposed between each groove 238 at locations corresponding generally to the phalanges bones of the wearer's fingers. In some embodiments, pads 230 disposed generally over the wearer's metacarpal bones are larger than the pads 230 disposed generally over the wearer's phalanges bones. In some embodiments, pads 230 disposed generally over the wearer's metacarpal bones are smaller than the pads 230 disposed generally over the wearer's phalanges bones. In some embodiments, one or more graphic or indicia 250 can be located on dorsal portion 204 of glove 200.

As shown, for example, in FIGS. 7-9,12, and 13, in some embodiments, glove 200 can include cuff 240. In some embodiments, cuff 240 can include one or more pad 230, which can be included in cuff 240 by any of the methods of manufacturing protective apparel described herein. In some embodiments, cuff 240 can include strap 242. Strap 242 can be used to adjust the size and fit of cuff 240 about the user's wrist or forearm. In some embodiments, strap 242 can include part of a hook and loop fastener to fasten strap 242 to cuff 240 about the user's wrist or forearm. Cuff 240 can also be configured for use with other types of protective apparel, for example, but not limited to arm pads, knee pads, and shin pads.

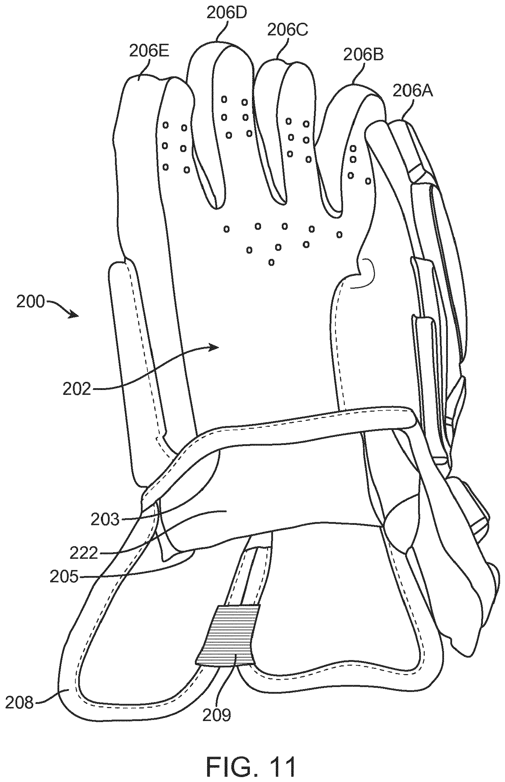

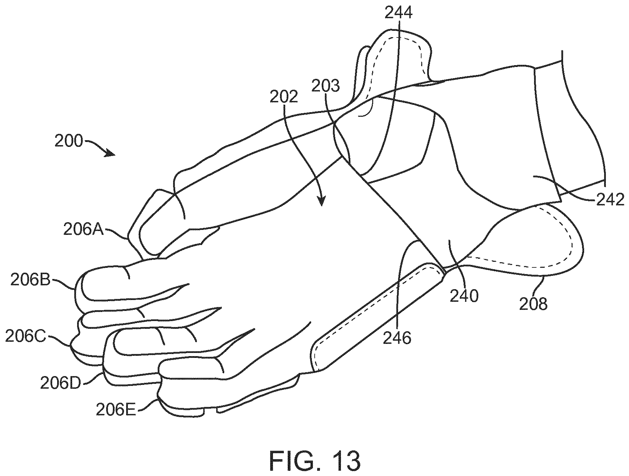

As shown, for example, in FIGS. 11 and 13, in some embodiments, glove 200 can include a rear edge 203 of palmar portion 202. In some embodiments, glove 200 can include a rear edge 205 of dorsal portion 204. In some embodiments, cuff 240 can be attached to palmar portion 202 and/or dorsal portion 204 of glove 200. For example, a front edge 244 of cuff 240 can be attached to rear edge 203 and/or rear edge 205 of palmar portion 202 and dorsal portion 204, respectively. In some embodiments, cuff 240 can be stitched along seam 246 to the rear edges 203, 205 of palmar and dorsal portions 202, 204, respectively. In some embodiments, cuff 240 can be attached entirely around a circumference of front edge 244. In some embodiments, cuff 240 can be ripped off or cut out by the wearer, if desired.

As shown, for example in FIG. 11, in some embodiments, wrist portion 208 can include a plurality of sections. In some embodiments, adjacent sections can be coupled to one another, for example, by a band 209. In some embodiments, band 209 can be an elastic material.

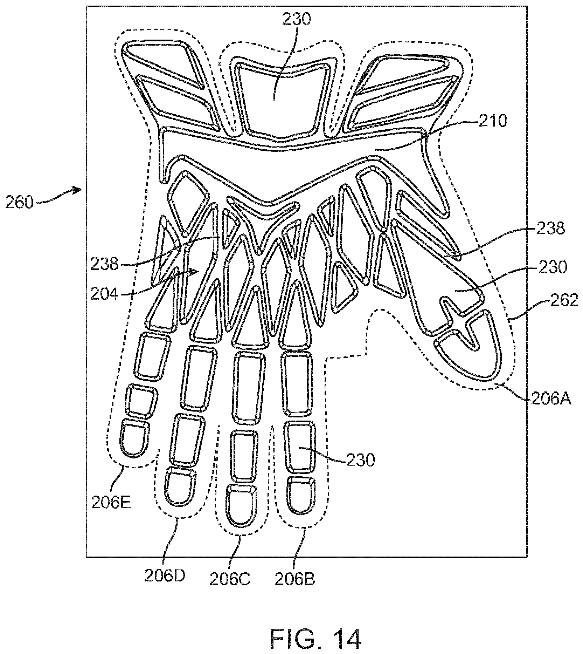

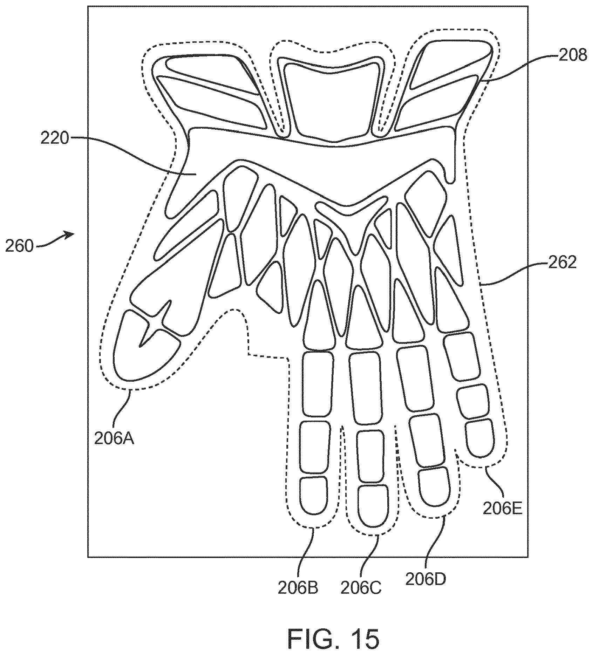

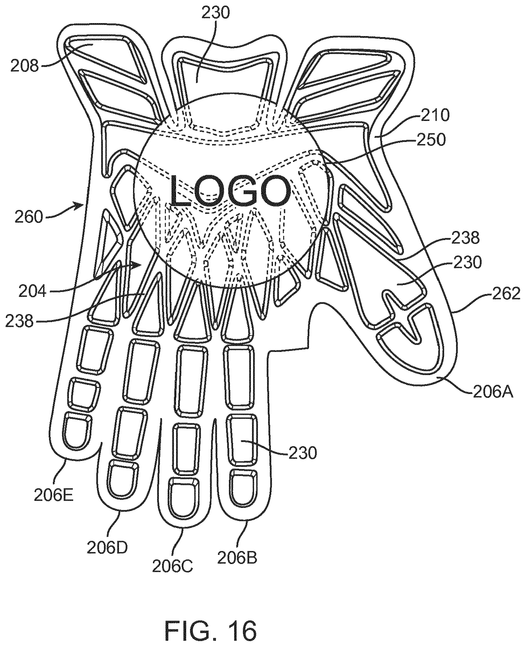

FIGS. 14-16 illustrate glove templates 260, according to embodiments. Glove templates 260 can be used to form dorsal portion 204 of glove 200. Glove template 260 can be manufactured according to any of the methods described herein. In some embodiments, upon forming glove template 260, it can be cut along edge 262 to remove excess material from the manufacturing process. FIG. 14 illustrates an embodiment in which glove template 260 becomes the outer layer 210 of the dorsal portion 204 of glove 200. FIG. 15 shows the inner layer 220, according to an embodiment. FIG. 16 illustrates a glove template 260 after trimming along edge 262 to remove excess material. FIG. 16 also illustrates the addition of a graphic or indicia 250. For example, graphic 250 can be added to outer layer 210 of glove template 260 by sublimation.

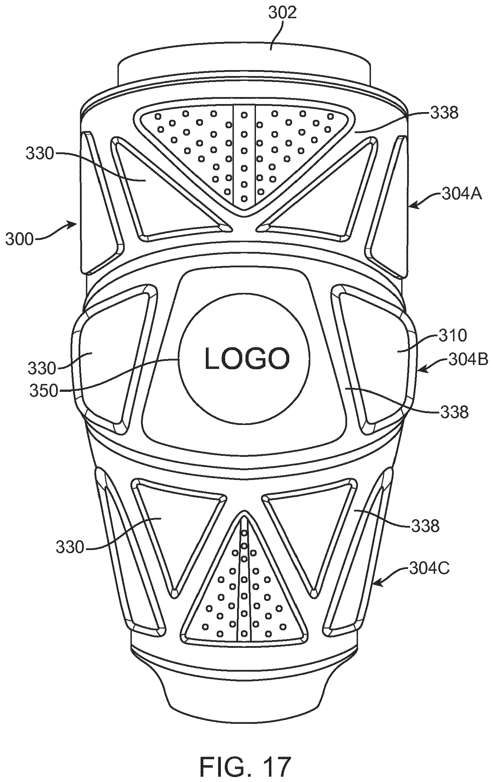

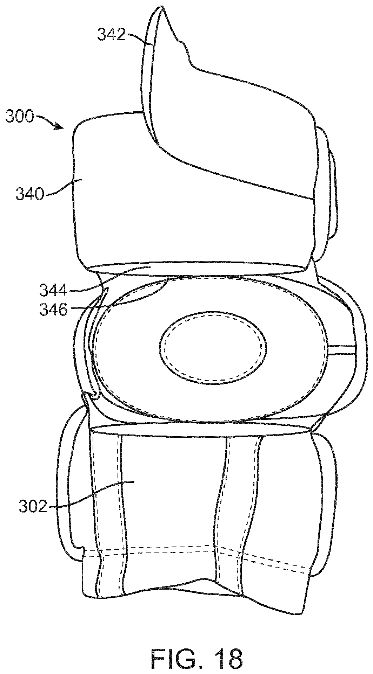

FIGS. 17 and 18 illustrate an elbow pad 300, according to an embodiment. In some embodiments, elbow pad 300 can include sleeve 302 which can be disposed about the wearer's arm to hold elbow pad 300 in place. In some embodiments, sleeve 302 can be an elastic textile. In some embodiments, elbow pad 300 can include one or more padded portions 304A, 304B, and 304C with pads 330 of various shapes and sizes. For example, in some embodiments, padded portions 304A and 304C can have one or more triangular pads 330 and padded portion 304B can have one or more quadrilateral pads 330. The padded portions 304A-C can be made according to any of the methods described herein. Padded portions 304A-C can be separate pieces coupled together, or a single integral piece. In some embodiments, padded portions 304A-C can include outer layer 310, which can encapsulate one or more pads 330. In some embodiments, elbow pad 300 can include channels or grooves 338 between the pads 330. In some embodiments, outer layer 310 of one or more padded portions 304A-C can include one or more graphic or indicia 350, for example, a sublimated graphic. In some embodiments, padded portions 304A, 304B, and 304C can be disposed over the wearer's upper arm (e.g., triceps and humerus), elbow joint, and forearm (e.g., radius and ulna), respectively.

As shown, for example in FIG. 18, in some embodiments, elbow pad 300 can include cuff 340, which can be similar to the cuff described with respect to glove 200 in FIGS. 7-9,12, and 13, for example. In some embodiments, cuff 340 can include strap 342 to adjust cuff 340 about the wearer's arm. In some embodiments, cuff 340 can include front edge 344, which can be attached to the rear side of a padded portion 304 of elbow pad 300, for example, along seam 346.

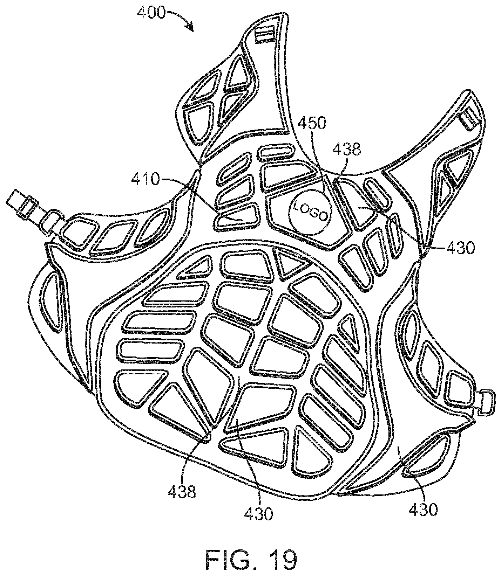

FIG. 19 illustrates chest protector 400, according to an embodiment. Chest protector 400 can be made according to any of the methods described herein. In some embodiments, chest protector 400 can include outer layer 410, which can include one or more pads 430. In some embodiments, chest protector 400 can include one or more channels or grooves 438 between pads 430. In some embodiments, pads 430 can be disposed to protect certain anatomical locations of the wearer. For example, one or more pads 430 can be disposed such that they cover the wearer's shoulders, chest, abdomen, and/or ribs. In some embodiments, a majority of pads 430 can be a quadrilateral shape. In some embodiments, a pentagonal pad can be disposed generally over the wearer's sternum. In some embodiments, chest protector 400 can include one or more graphic or indicia 450 on outer layer 410, for example, a sublimated graphic.

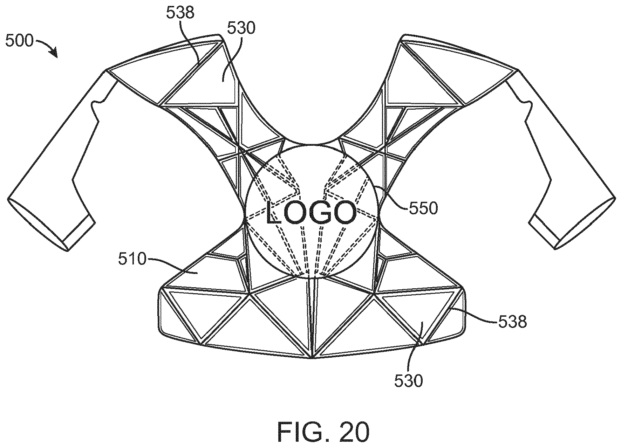

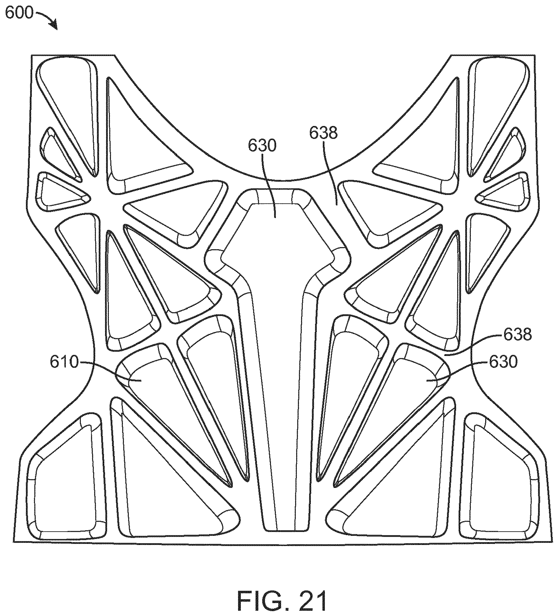

FIG. 20 illustrates shoulder pads 500, according to an embodiment. Shoulder pads 500 can be made according to any of the methods described herein. In some embodiments, shoulder pads 500 can include outer layer 510 which can cover one or more pads 530. In some embodiments, shoulder pads 500 can include one or more channels or grooves 538 between pads 530. In some embodiments, pads 530 can be disposed to protect certain anatomical locations of the wearer. For example, one or more pads 530 can be disposed such that they cover the wearer's shoulders, chest, and/or ribs. In some embodiments, a majority of pads 530 can be generally triangular in shape, for example, a triangle with rounded corners. In some embodiments, an elongate pad can be disposed generally over the wearer's sternum, extending from a neck portion to a bottom portion of shoulder pads 500, as shown, for example, in FIG. 21. In some embodiments, shoulder pads 530 can include one or more graphic or indicia 550 on outer layer 510, for example, a sublimated graphic.

FIGS. 21 and 22 illustrate a front and rear view, respectively, of protective apparel 600, according to an embodiment. As shown in FIGS. 21 and 22, protective apparel 600 can have an outer layer 610 covering one or more pads 630 disposed between the outer layer 610 and an inner layer 620. In some embodiments, protective apparel 600 can include one or more channels or grooves 638 between pads 630. In some embodiments, protective apparel 600 can include graphics or indicia on outer layer 610 (not shown), for example, a sublimated graphic.

As with other types of protective apparel described herein, in some embodiments, protective apparel 600 can be manufactured by vacuum-forming outer layer 610 on a mold 700 having a pattern 702, as shown, for example, in FIG. 23. In some embodiments, outer layer 610 can be TPU, a textile, or a composite of TPU bonded to a textile. One or more cavities 616 can be formed in outer layer 610 because of the pattern 702 of mold 700. The size, shape, indentations, and ridges of pattern 702 can be configured for particular types of protective apparel, for example, any of the embodiments of protective apparel disclosed herein. As shown, for example, in FIG. 24, foam 630 can be disposed in cavities 616. Foam 630 can be die-cut foam pieces placed into the cavities 616, molded foam, and/or liquid foam that is poured or injected into cavities 616.

In some embodiments, inner layer 620 can be disposed onto the foam 630 and outer layer 610 to enclose the foam 630 between inner layer 620 and outer layer 610 of the protective apparel 600. As shown in FIG. 22, inner layer 620 of protective apparel 600 includes one or more protrusions 622. These protrusions can be formed, for example, by pressing a plate 710 against the inner layer 620, as described, for example, with respect to Step 28 in FIG. 2. Protrusions 622 can have any size, shape, or configuration. For example, protrusions 622 can have a circular outline or a round-cornered rectangular outline. In some embodiments, protrusions 622 can be disposed in rows and/or columns. The protrusions 622 correspond to the indentations 712 in plate 710, as shown, for example, in FIG. 25. As liquid foam between inner layer 620 and outer layer 610 cures, the foam can expand into the indentations 712 of the plate 710 pressed against inner layer 620, thereby creating the protrusions 622 of inner layer 620. These protrusions 622 can reduce surface contact with the body the wearer, promoting and improving air flow, keeping the athlete cooler.

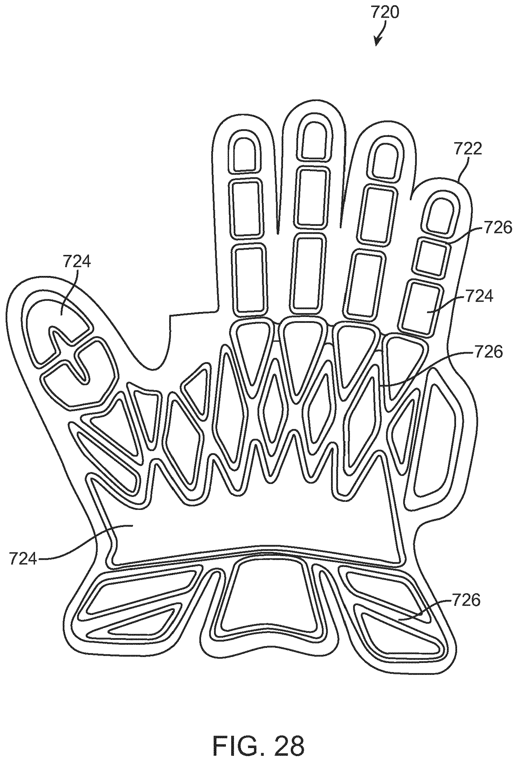

FIGS. 28-31 illustrate embodiments of molds 720, 730, 750, and 751 for vacuum-forming protective apparel. The molds can be made from any suitable material, for example, metal or plastic. When a layer of material is disposed on top of the mold and the vacuum is turned on, the material can be drawn into the holes to form an "ice cube tray" as discussed above. The molds can have patterns shaped for a particular type of protective apparel, with holes and walls positioned so that foam can be disposed into the cutout areas once the first layer is vacuum-formed on the mold. The holes and walls making up the patterns can have many other configurations in addition to the embodiments shown in FIGS. 28-31.

FIG. 28 illustrates an embodiment of a glove mold 720, with a pattern 722 generally in the shape of a hand. Glove mold 720 includes a plurality of holes 724 and a plurality of walls 726 disposed between the holes 724. Other configurations of the holes 724 and walls 726 of pattern 722 for glove mold 720 are contemplated. The holes 724, for example, can have other shapes, sizes, and locations. This can provide a different look, feel, and protection scheme to the glove once the foam is disposed into the molded shell and enclosed between another layer of material.

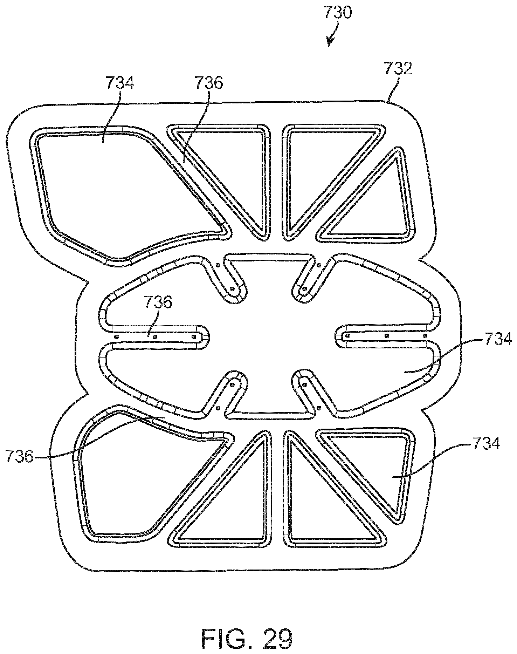

FIG. 29 illustrates an example of an elbow pad mold 730. The pattern 732 of elbow pad mold 730 includes a plurality of holes 734 and a plurality of walls 736 disposed between the holes 734. Other configurations of the holes 734 and walls 736 of pattern 732 for elbow pad mold 730 are contemplated. The holes 734, for example, can have other shapes, sizes, and locations. This can provide a different look, feel, and protection scheme to the elbow pad once the foam is disposed into the molded shell and enclosed between another layer of material.

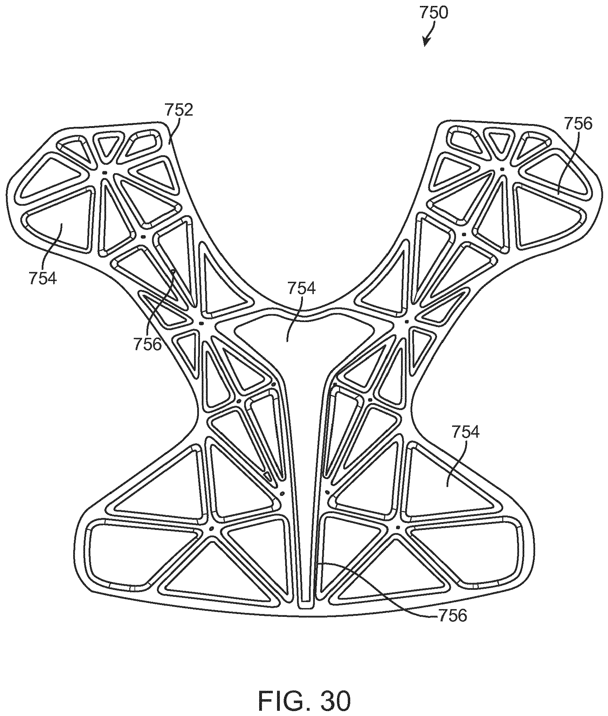

FIG. 30 illustrates an example of chest mold 750 for shoulder pads. The pattern 752 of chest mold 750 includes a plurality of holes 754 and a plurality of walls 756 disposed between the holes 754. Other configurations of the holes 754 and walls 756 of pattern 752 for chest mold 750 are contemplated. The holes 754, for example, can have other shapes, sizes, and locations. This can provide a different look, feel, and protection scheme to the chest portion of the shoulder pads once the foam is disposed into the molded shell and enclosed between another layer of material.

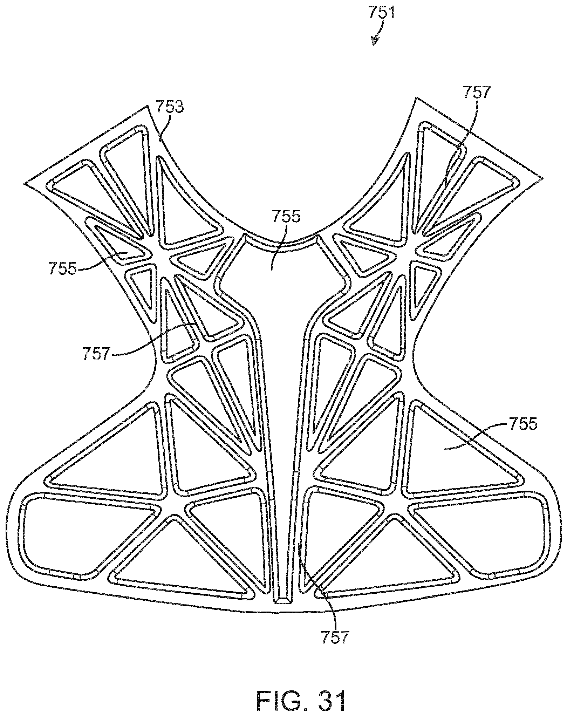

FIG. 31 illustrates an example of back mold 751 for shoulder pads. The pattern 753 of back mold 751 includes a plurality of holes 755 and a plurality of walls 757 disposed between the holes 755. Other configurations of the holes 755 and walls 757 of pattern 753 for back mold 751 are contemplated. The holes 755, for example, can have other shapes, sizes, and locations. This can provide a different look, feel, and protection scheme to the back portion of the shoulder pads once the foam is disposed into the molded shell and enclosed between another layer of material.

It is to be appreciated that the Detailed Description section, and not the Brief Summary and Abstract sections, is intended to be used to interpret the claims. The Summary and Abstract sections may set forth one or more but not all exemplary embodiments of protective apparel as contemplated by the inventors, and thus, are not intended to limit the present embodiments and the appended claims in any way.

The present disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present disclosure should not be limited by any of the above-described exemplary embodiments, but should be defined only in accordance with the following claims.

## Claims

1. An article of protective apparel (100, 200, 600), comprising:
a padded portion having an outer layer (110, 210, 610), an inner layer (120, 220, 620), and a padding piece (130, 230, 630) disposed between the outer layer and the inner layer in a cavity of the outer layer, wherein the padded portion is formed by:
vacuum-forming the outer layer on a mold;
disposing the padding piece in the cavity of the outer layer; and
attaching the inner layer to the outer layer, **characterized in that** the inner layer is the body-touching side of the protective apparel and includes one or more protrusions.

2. An article of protective apparel of claim 1, wherein:
the outer layer of the padded portion comprises a first outer shell comprising a vacuum formed first material comprising:
a first cavity,
a second cavity, and
a channel disposed between the first cavity and the second cavity;
wherein the padding piece comprises
a first padding piece disposed in the first cavity and
a second padding piece disposed in the second cavity; and
wherein the inner layer comprises a first inner layer attached to the first outer shell.

3. The article of protective apparel of claim 1 or 2, wherein the first material comprises a thermoplastic elastomer and / or a thermoplastic polyurethane and / or a fabric.

4. The article of protective apparel of one of the preceding claims, wherein the first padding piece comprises die-cut foam and / or hardened liquid foam.

5. The article of protective apparel of one of the preceding claims, wherein the second padding piece comprises molded foam.

6. The article of protective apparel of any of the preceding claims 1 - 5, wherein the protective apparel is a glove comprising:
a palmar portion;
a dorsal portion; and
a cuff portion.

7. The article of protective apparel of claim 6, wherein the dorsal portion comprises the first outer shell, the first padding piece, the second padding piece, and the first inner layer.

8. The article of protective apparel of claim 6 or 7, wherein the cuff portion is coupled to the dorsal portion, the cuff portion comprising:
a second outer shell comprising a vacuum-formed second material, the second outer shell having a third cavity;
a third padding piece disposed in the third cavity;
a second inner layer attached to the second outer shell, wherein the third padding piece is disposed between the second outer shell and the second inner layer; and
a strap configured to secure the cuff portion about a wearer's arm.

9. The article of protective apparel of claim 8, wherein the first material and the second material are the same.

10. The article of protective apparel of any of the claims 1 - 5, wherein the protective apparel is an elbow pad, shoulder pads, or a chest protector.

11. A method of making an article of protective apparel, comprising:
disposing (20) a first layer on a vacuum mold, the vacuum mold having a pattern with a plurality of indentations;
vacuum-forming (22) the first layer such that the first layer includes a plurality of cavities corresponding to the indentations of the vacuum mold;
disposing foam in the cavities of the first layer;
attaching (26) a second layer to the first layer; **characterized by**
pressing (28) a plate against the second layer, the plate including one or more indentations and / or protrusions.

12. The method of claim 11, wherein disposing foam in the cavities comprises disposing die-cut foam pieces in the cavities.

13. The method of claim 11 or 12, wherein disposing foam in the cavities comprises injecting liquid foam in the cavities.

14. The method of any of the claim 11 - 13, further comprising fabricating a sublimated graphic on an outer surface of the first layer.

15. The method of claim any of the claims 11 - 14, further comprising disposing a sheet over the first layer prior to vacuum-forming the first layer, wherein the sheet comprises silicone or an elastomer.

## Patentansprüche

1. Ein Schutzkleidungsstück (100, 200, 600), umfassend:
einen gepolsterten Abschnitt mit einer Außenschicht (110, 210, 610), einer Innenschicht (120, 220, 620) und einem Polsterstück (130, 230, 630), das zwischen der Außenschicht und der Innenschicht in einem Hohlraum der Außenschicht angeordnet ist, wobei der gepolsterte Abschnitt gebildet ist durch:
Vakuumformen der Außenschicht auf einer Form;
Anordnen des Polsterstücks im Hohlraum der Außenschicht; und
Anbringen der Innenschicht an der Außenschicht, **dadurch gekennzeichnet, dass** die Innenschicht die körperberührende Seite der Schutzkleidung ist und eine oder mehrere Erhebungen aufweist.

2. Schutzkleidungsstück nach Anspruch 1, wobei:
die Außenschicht des gepolsterten Abschnitts eine erste Außenhülle umfasst, die ein erstes vakuumgeformtes Material umfasst, das umfasst:
einen ersten Hohlraum,
einen zweiten Hohlraum, und
einen Kanal, der zwischen dem ersten Hohlraum und dem zweiten Hohlraum angeordnet ist; wobei das Polsterstück umfasst:
ein erstes Polsterstück, das in dem ersten Hohlraum angeordnet ist, und
ein zweites Polsterstück, das in dem zweiten Hohlraum angeordnet ist; und
wobei die innere Schicht eine erste innere Schicht umfasst, die an der ersten Außenhülle befestigt ist.

3. Schutzkleidungsstück nach Anspruch 1 oder 2, wobei das erste Material ein thermoplastisches Elastomer und / oder ein thermoplastisches Polyurethan und / oder ein Gewebe umfasst.

4. Schutzkleidungsstück nach einem der vorstehenden Ansprüche, wobei das erste Polsterstück gestanzten Schaumstoff und / oder gehärteten Flüssigschaum umfasst.

5. Schutzkleidungsstück nach einem der vorstehenden Ansprüche, wobei das zweite Polsterstück Formschaum umfasst.

6. Schutzkleidungsstück nach einem der vorstehenden Ansprüche 1 - 5, wobei das Schutzkleidungsstück ein Handschuh ist, der umfasst:
eine palmaren Abschnitt;
einen dorsalen Abschnitt; und
einen Manschettenabschnitt.

7. Schutzkleidungsstück nach Anspruch 6, wobei der dorsale Abschnitt die erste Außenschale, das erste Polsterstück, das zweite Polsterstück und die erste Innenschicht umfasst.

8. Schutzkleidungsstück nach Anspruch 6 oder 7, wobei der Manschettenabschnitt mit dem dorsalen Abschnitt gekoppelt ist, wobei der Manschettenabschnitt umfasst:
eine zweite Außenhülle, die ein vakuumgeformtes zweites Material umfasst, wobei die zweite Außenhülle einen dritten Hohlraum aufweist;
ein drittes Polsterstück, das in dem dritten Hohlraum angeordnet ist;
eine zweite innere Schicht, die an der zweiten Außenhülle befestigt ist, wobei das dritte Polsterstück zwischen der zweiten Außenhülle und der zweiten inneren Schicht angeordnet ist; und
einen Riemen, der konfiguriert ist, um den Manschettenabschnitt um den Arm eines Trägers zu sichern.

9. Schutzkleidungsstück nach Anspruch 8, wobei das erste Material und das zweite Material gleich sind.

10. Schutzkleidungsstück nach einem der Ansprüche 1 - 5, wobei die Schutzkleidung ein Ellbogenpolster, Schulterpolster oder ein Brustschutz ist.

11. Verfahren zur Herstellung eines Schutzkleidungsstücks, umfassend:
Anordnen (20) einer ersten Schicht auf einer Vakuumform, wobei die Vakuumform ein Muster mit einer Vielzahl von Vertiefungen aufweist;
Vakuumformen (22) der ersten Schicht, so dass die erste Schicht eine Vielzahl von Hohlräumen beinhaltet, die den Vertiefungen der Vakuumform entsprechen;
Einbringen von Schaum in die Hohlräume der ersten Schicht;
Anbringen (26) einer zweiten Schicht an der ersten Schicht; **gekennzeichnet durch**:
Pressen (28) einer Platte gegen die zweite Schicht, wobei die Platte eine oder mehrere Vertiefungen und / oder Erhebungen aufweist.

12. Verfahren nach Anspruch 11, wobei Einbringen von Schaum in den Hohlräumen Einbringen von gestanzten Schaumstoffstücken in den Hohlräumen umfasst.

13. Verfahren nach Anspruch 11 oder 12, wobei Einbringen von Schaum in den Hohlräumen Einspritzen von flüssigem Schaum in die Hohlräume umfasst.

14. Verfahren nach einem der Ansprüche 11 - 13, ferner umfassend: Herstellen einer sublimierten Grafik auf einer Außenfläche der ersten Schicht.

15. Verfahren nach einem der Ansprüche 11 - 14, ferner umfassend: Anordnen einer Folie über der ersten Schicht vor dem Vakuumformen der ersten Schicht, wobei die Folie Silikon oder ein Elastomer umfasst.

## Revendications

1. Un article vestimentaire protecteur (100, 200, 600), comprenant :
une partie rembourrée possédant une couche externe (110, 210, 610), une couche interne (120, 220, 620), et une pièce de rembourrage (130, 230, 630) disposée entre la couche externe et la couche interne dans une cavité de la couche externe, la partie rembourrée étant formée par :
formage sous vide de la couche externe sur un moule ;
mise en place de la pièce de rembourrage dans la cavité de la couche externe ; et
solidarisation de la couche interne à la couche externe, **caractérisé en ce que** la couche interne est le côté en contact avec le corps du vêtement protecteur et comprend un ou plusieurs reliefs.

2. L'article vestimentaire protecteur de la revendication 1, dans lequel :
la couche externe de la partie rembourrée comprend une première enveloppe externe comprenant un premier matériau formé sous vide comprenant :
une première cavité,
une seconde cavité, et
une gorge disposée entre la première cavité et la seconde cavité ;
dans lequel la pièce de rembourrage comprend:
une première pièce de rembourrage disposée dans la première cavité et
une seconde pièce de rembourrage disposée dans la seconde cavité ; et
dans lequel la couche interne comprend une première couche interne solidarisée à la première enveloppe externe.

3. L'article vestimentaire protecteur de la revendication 1 ou 2, dans lequel le premier matériau comprend un élastomère thermoplastique et/ou un polyuréthanne thermoplastique et/ou un tissu.

4. L'article vestimentaire protecteur de l'une des revendications précédentes, dans lequel la première pièce de rembourrage comprend une mousse découpée à l'emporte-pièce et/ou une mousse liquide durcie.

5. L'article vestimentaire protecteur de l'une des revendications précédentes, dans lequel la seconde pièce de rembourrage comprend une mousse moulée.

6. L'article vestimentaire protecteur de l'une des revendications précédentes 1 à 5, dans lequel le vêtement protecteur est un gant comprenant :
une partie palmaire ;
une partie dorsale ; et
une partie de manchette.

7. L'article vestimentaire protecteur de la revendication 6, dans lequel la partie dorsale comprend la première enveloppe externe, la première pièce de rembourrage, la seconde pièce de rembourrage, et la première couche interne.

8. L'article vestimentaire protecteur de la revendication 6 ou 7, dans lequel la partie de manchette est couplée à la partie dorsale, la partie de manchette comprenant :
une seconde enveloppe externe comprenant un second matériau formé sous vide, la seconde enveloppe externe présentant une troisième cavité ;
une troisième pièce de rembourrage disposée dans la troisième cavité ;
une seconde couche interne solidarisée à la seconde enveloppe externe, la troisième pièce de rembourrage étant disposée entre la seconde enveloppe externe et la seconde couche interne ; et
une sangle configurée pour maintenir la partie de manchette autour du bras d'un porteur.

9. L'article vestimentaire protecteur de la revendication 8, dans lequel le premier matériau et le second matériau sont les mêmes.

10. L'article vestimentaire protecteur de l'une des revendications 1 à 5, dans lequel le vêtement protecteur est une coudière, une épaulière, ou un plastron.

11. Un procédé de fabrication d'un article vestimentaire protecteur, comprenant :
la mise en place (20) d'une première couche sur un moule sous vide, le moule sous vide possédant un motif avec une pluralité d'indentations ;
le formage sous vide (22) de la première couche de telle sorte que la première couche inclue une pluralité de cavités correspondant aux indentations du moule sous vide ;
la mise en place d'une mousse dans les cavités de la première couche ;
la solidarisation (26) d'une seconde couche à la première couche ; **caractérisé par** l'appui (28) d'une plaque contre la seconde couche, la plaque comprenant une ou plusieurs indentations et/ou reliefs.

12. Le procédé de la revendication 11, dans lequel la mise en place de la mousse dans les cavités comprend la mise en place dans les cavités de pièces de mousse découpées à l'emporte-pièce.

13. Le procédé de la revendication 11 ou 12, dans lequel la mise en place de la mousse dans les cavités comprend l'injection d'une mousse liquide dans les cavités.

14. Le procédé de l'une des revendications 11 à 13, comprenant en outre la fabrication d'un graphique par sublimation sur une surface externe de la première couche.

15. Le procédé de l'une des revendications 11 à 14, comprenant en outre la mise en place d'une feuille sur la première couche avant le formage sous vide de la première couche, la feuille comprenant du silicone ou un élastomère.
